# EUROPÄISCHE PATENTANMELDUNG

(11) **EP 2 015 235 A1**
(43) Veröffentlichungstag der Anmeldung: **14.01.2009**
(21) Anmeldenummer: 07012480.5
(22) Anmeldetag: 26.06.2007
(51) Int. Cl.: G06Q 10/00

(54) **Versandsystem für eine Sendung sowie Verfaren zum Bearbeiten der Sendung**

(71) Anmelder: Deutsche Post AG, 53113 Bonn (DE)
(72) Erfinder: Mayer, Boris, 53129 Bonn (DE); Ogilvie, Thomas, 53179 Bonn (DE)
(74) Vertreter: Jostarndt, Hans-Dieter

(57) **Zusammenfassung**

Die Erfindung betrifft ein Versandsystem für eine Warensendung sowie ein entsprechendes Verfahren zur Bearbeitung von Daten, die in einem Versandsystem für eine Warensendung anfallen.

Das Versandsystem für mindestens eine Warensendung umfasst
- ein erstes Benutzerterminal (Term1) zur Eingabe von Daten für die Warensendung,
- eine Empfangsstation für die Warensendung mit einem weiteren Benutzerterminal (TERM2) zur Eingabe von Daten für die Warensendung,
- einen Server (ARGUS), der die Daten für die Warensendung von dem ersten und dem weiteren Benutzerterminal (Term1, TERM2) wahlweise speichert, verwaltet, bearbeitet und/oder auswertet,
- eine Kommunikationseinrichtung (EDI-CC), die mit dem ersten Benutzerterminal (Term1), gegebenenfalls dem weiteren Benutzerterminal (TERM2) und dem Server (ARGUS) verbunden ist und eine Datenumwandlung jeweils so vornimmt, dass die Daten des ersten und gegebenenfalls des weiteren Benutzerterminals (Term1, TERM2) sowie des Servers (ARGUS) miteinander kompatibel sind, wobei die Kommunikationseinrichtung (EDI-CC) eine Schnittstelle zu einem Datennetzwerk (GXS) und darüber zu mindestens einem weiteren Versandsystem und/oder einem weiteren Datenverarbeitungssystem umfasst.

## Beschreibung

Die Erfindung betrifft ein Versandsystem für mindestens eine zollrelevante Warensendung sowie ein Verfahren zur Bearbeitung von Daten, die in einem Versandsystem für mindestens eine Warensendung anfallen.

Für die Abfertigung postalischer Produkte im Rahmen nationaler und internationaler Zollvereinbarungen existieren zahlreiche Vorschriften. Beispielsweise bestehen vereinfachte Abfertigungsverfahren für alle postalischen Produkte, die unter die Artikel 237, 238 ZK-DVO (Zollkodex-Durchführungsverordnung) fallen. Dabei sind Sendungen mit zollabgabepflichtigem Inhalt für die zollrechtliche Ein- und Ausfuhrabwicklung ab einem gewissen Wert mit einer vollständig ausgefüllten Zollinhaltserklärung an der Sendung zu kennzeichnen. In den meisten Staaten ist derzeit keine elektronische Datenübermittelung an die nationalen Zollverwaltungen vorgeschrieben. Bis zu einer bestimmten Wertgrenze erfolgen die Zollanmeldungen in der Regel mündlich. Bei einem darüber liegenden Wert hat eine schriftliche bzw. elektronische Zollanmeldung für jede einzelne Sendung zu erfolgen. Außerdem bestehen festgelegte Freigrenzen für B2C-Sendungen (Business-to-Consumer-Sendungen) und B2B-Sendungen (Business-to-Business-Sendungen) sowie für C2C-Sendungen (Consumer-to-Consumer-Sendungen).

Die Zollverwaltungen kalkulieren die zu zahlenden Abgaben auf Grundlage der postalischen Dokumente. Häufig sind dabei keine ausreichenden Informationen auf den für die Zollinhaltserklärung vorgesehenen Formularen CN 22 und CN 23 vorhanden, aufgrund derer eine ordnungsgemäße Zollabwicklung durchgeführt werden kann. Zusätzliche Schwierigkeiten verursachen die auf den postalischen Dokumenten verwendeten unterschiedlichen Sprachen.

Weltweit haben sich darüber hinaus bei den Zollverwaltungen neue Zielsetzungen etabliert: Neben fiskalischen Betrachtungen der Zollkontrollen rücken sicherheitsrelevante Aspekte in den Fokus. Die gesteigerten Sicherheitsanforderungen machen ein besonderes Risikomanagement erforderlich. Hinzu kommen rechtliche Änderungen im Postverkehr, z. B. die Abschaffung von Freigrenzen für Warensendungen und die Abschaffung von mündlichen Zollanmeldungen. Außerdem wird eine zunehmende Globalisierung angestrebt, beispielsweise durch eine Angleichung von rechtlichen Bestimmungen für Postorganisationen und Expressdienstleister auf internationaler Ebene. Des Weiteren sind ein weltweit operativer Austausch von Zollinformationen für postalische Produkte sowie mehr Transparenz im Postverkehr und die Bereitstellung elektronischer Informationen zur Durchführung von Risikoanalysen wünschenswert.

Erfindungsgemäß wird diese Aufgabe gelöst durch ein Versandsystem nach Anspruch 1 sowie durch ein Verfahren nach Anspruch 14. Vorteilhafte Weiterbildungen der Erfindung sind in den abhängigen Ansprüchen enthalten.

Es wird erfindungsgemäß vorgeschlagen, ein Versandsystem mit einzelnen, mehreren oder gegebenenfalls allen der nachfolgend genannten Bestandteile auszustatten:
- ein erstes Terminal zur Eingabe von ersten Daten für die Warensendung,
- ein Erfassungsmittel zum Erfassen von weiteren Daten für die Warensendung,
- einen Konsolidierungsserver, der die ersten Daten wahlweise speichert, verwaltet, bearbeitet und/oder auswertet,
- ein Mittel zum Übertragen der ersten Daten an den Konsolidierungsserver,
- ein Mittel zum Übertragen der weiteren Daten an den Konsolidierungsserver,
- ein Mittel zum gemeinsamen Weiterleiten der ersten Daten, wobei dieses Mittel so beschaffen ist, dass ausgewertet wird, ob die weiteren Daten empfangen wurden und dass ein Feststellen des Empfangs der weiteren Daten eine Übermittelung der ersten Daten an einen Datenempfänger veranlasst.

Das Veranlassen der Übermittelung der ersten Daten an den Datenempfänger kann erfindungsgemäß auf unterschiedliche Weise erfolgen.

Beispielsweise ist es möglich, ein Empfangen der weiteren Daten auszuwerten.

So kann zum Beispiel bei einem Empfang der weiteren Daten zu einer Sendung ermittelt werden, ob zu dieser Sendung bereits erste Daten vorliegen.

Eine Zuordnung zwischen den ersten Daten und den weiteren Daten erfolgt beispielsweise über eine Sendungsidentifikationsnummer.

Durch diese Zuordnung ist es möglich festzustellen, ob die weiteren Daten empfangen wurden. Bei den weiteren Daten kann es sich um verschiedene Informationen handeln, beispielsweise eine Information über eine Einlieferung der Postsendung, einen Eingang der Postsendung in einem Bearbeitungszentrum oder ein Passieren einer Erfassungsstelle. Insbesondere kann es sich bei den weiteren Daten um so genannte Scan-Events handeln.

Es ist jedoch gleichfalls möglich, dass es sich bei den weiteren Daten um zusätzliche Informationen handelt.

So ist es beispielsweise möglich, gegebenenfalls unvollständige erste Daten durch weitere Daten zu ersetzen, beispielsweise durch von einem Einlieferer der Postsendung nicht ausgefüllte Daten der Sendung.

Eine weitere bevorzugte Ausführungsform der Erfindung sieht vor, eine Vollständigkeitsüberprüfung der ersten Daten so durchzuführen, dass die Erzeugung einer Versandmarke bzw. deren Einlieferung der Sendung in einen Sendungslauf nur dann ermöglicht wird, wenn die ersten Daten vollständig sind. Eine Vollständigkeit der ersten Daten bedeutet in diesem Zusammenhang insbesondere, dass hierfür vorgesehene Pflichtangaben, beispielsweise zu einem Absender, Empfänger der Sendung oder zum Inhalt der Sendung eingetragen wurden.

Eine Weiterbildung hiervon sieht vor, dass ein entsprechender Sendungsaufkleber - beispielsweise in Form eines bedruckten Aufklebers oder in Form eines Informationen enthaltenden Transponders - angebracht wird. Bei dem Transponder handelt es sich beispielsweise um einen RFID-TAG, der als Identifikationsangabe zum Beispiel die Sendungsidentifikationsnummer enthält.

Eine Weiterbildung der Erfindung zeichnet sich dadurch aus, dass das Versandsystem eine Kommunikationseinrichtung zum Empfangen der ersten Daten enthält.

Eine bevorzugte Ausführungsform der Erfindung zeichnet sich dadurch aus, dass das erste Terminal ein Benutzerterminal ist.

Eine weitere, gleichfalls bevorzugte Ausführungsform der Erfindung sieht vor, dass das erste Terminal ein automatisiertes Erfassungsterminal ist.

Ferner ist es zweckmäßig, dass das Versandsystem ein Mittel zum Ausdrucken der ersten Daten enthält.

Bei dem Mittel zum Ausdrucken der ersten Daten handelt es sich beispielsweise um einen Laserdrucker, einen Tintenstrahldrucker oder einen Thermotransferdrucker, der die Sendung oder einen mit der Sendung verbindbaren Aufkleber (z. B. ein Etikett oder ein Blatt Papier) bedrucken kann.

Es ist gleichfalls vorteilhaft, dass das Versandsystem ein Mittel zum Speichern von Daten in dem Transponder enthält. Bei dem Mittel zum Speichern der Daten in dem Transponder handelt es sich beispielsweise um einen Sender für elektromagnetische Wellen, der durch eine geeignete Computereinheit - gegebenenfalls einen Benutzercomputer oder einen Server - ansteuerbar ist.

Dieses Mittel kann die ersten Daten - insbesondere Daten zum Inhalt der Sendung, zu ihrem Gewicht, zu einem Empfänger oder einem Absender beinhalten.

Ferner beinhaltet die Erfindung ein Verfahren zum Bearbeiten der Warensendung sowie durch ein Verfahren zur Bearbeitung von Daten, die in einem Versandsystem eingesetzt werden.

Das Verfahren zur Bearbeitung von mindestens einer Warensendung ist dadurch gekennzeichnet, dass erste Daten zu der Warensendung an einem ersten Terminal erfasst werden.

Bei dem ersten Terminal kann es sich beispielsweise um ein Benutzerterminal handeln.

Die Erfindung beinhaltet verschiedene Arten und/oder Orte zur Erfassung der ersten Daten.

Beispielsweise ist es möglich, die ersten Daten im Bereich des Benutzerterminals - etwa eines Benutzercomputers - zu erfassen. Dies erfolgt beispielsweise durch Einsatz eines Eingabemittels des Computers und gegebenenfalls unter Hinzuziehung einer graphischen Benutzeroberfläche (GUI) des Computers.

Besonders bevorzugte Ausführungsformen der Erfindung beinhalten, dass die ersten Daten sowohl physisch als auch auf elektronischem Weg übermittelt werden.

Eine Weiterbildung hiervon beinhaltet, dass die ersten Daten physisch mit der Postsendung verbunden werden - beispielsweise durch Bedrucken der Sendung, Aufbringen eines Aufklebers auf die Sendung oder Aufbringen eines Transponders auf die Sendung.

Zusätzlich werden die ersten Daten elektronisch übermittelt, beispielsweise an einen Netzwerkknoten oder Server.

Ferner ist es möglich, die ersten Daten im Bereich einer Einlieferungsstelle für die Postsendung zu erfassen.

Eine Fortbildung der Erfindung sieht vor, dass die Speicherung der ersten Daten in einem mit der Sendung verbindbaren Speichermedium, beispielsweise einem Transponder erfolgt.

Eine Fortbildung der Erfindung sieht vor, dass die Sendungen in ein Logistiksystem eingeliefert werden und dass wenigstens ein in dem Logistiksystem erfolgender Bearbeitungsschritt in Abhängigkeit von den ersten Daten erfolgt.

Eine Fortbildung des Verfahrens, des Informationsträgers, der Sendung und der Vorrichtung sieht vor, dass der Informationsträger mit einem zu versendenden Objekt verbindbar ist.

Eine bevorzugte Ausführungsform der als Sendung zu befördernden Objekte sieht vor, dass diese eine mit Sendungsinformationen beschreibbare Oberfläche aufweisen und/oder dass sie einen Informationsträger zum Speichern von erfassten graphischen Informationen enthalten.

Eine Weiterbildung des Verfahrens, des Informationsträgers, der Sendung und der Vorrichtung zeichnet sich dadurch aus, dass die Sendungsinformationen wenigstens teilweise durch Auswertung der erfassten grafischen Informationen ermittelt sind.

Eine Weiterbildung der Erfindung zeichnet sich dadurch aus, dass ein Sender elektromagnetische Signale sendet, die von dem Speichermedium empfangen werden können.

Bei den ersten Daten handelt es sich insbesondere um einzelne oder mehrere der nachfolgenden Informationen: Absender, Rechnungsempfänger, Empfänger, Ansprechpartner des Absenders, des Empfängers oder des Rechnungsempfängers und/oder Angaben zum Inhalt und/oder Wert der Sendung.

Die Erfindung kann mit einer Vielzahl von Vorrichtungen durchgeführt werden und ist daher nicht auf einzelne Vorrichtungen beschränkt.

Der Begriff Logistiksystem ist im Rahmen der Erfindung in einer weiten Bedeutung zu verstehen. Er umfasst insbesondere Systeme, welche die Mittel und Einrichtungen enthalten, um den Transport von Sendungen von Einlieferungsorten zu Zustellorten auf einem Transportweg, vorzugsweise innerhalb eines Postverteilnetzes, durchzuführen.

Eine Fortbildung des Verfahrens, der Vorrichtung, des Behälters und des Logistiksystems zeichnet sich dadurch aus, dass die Speicherung und/oder die Übermittelung der ersten Daten durch eine Vorrichtung zur Annahme der zu befördernden Objekte (Sendung) erfolgt.

Dies ermöglicht es beispielsweise, bei einer Einlieferung der Sendung den Einlieferungsvorgang festzustellen und gegebenenfalls zu übermitteln - insbesondere für Tracing-Zwecke - oder zu speichern - beispielsweise für Tracking-Zwecke.

Ferner ist es zweckmäßig, dass die Speicherung und/oder die Übermittelung der ersten Daten durch eine Interaktion mit der Vorrichtung erfolgt.

Eine Weiterentwicklung des Verfahrens, der Vorrichtung, des Behälters und des Logistiksystems sieht vor, den Informationsspeicher mit dem zu befördernden Objekt zu verbinden.

Eine Fortbildung des Verfahrens, der Vorrichtung, des Behälters und des Logistiksystems zeichnet sich dadurch aus, dass der Informationsspeicher eine Identifikationsangabe enthält.

Eine Weiterentwicklung des Verfahrens, der Vorrichtung, des Behälters und des Logistiksystems sieht vor, dass die Identifikationsangabe das zu befördernde Objekt identifiziert.

Eine Fortbildung des Verfahrens, der Vorrichtung, des Behälters und des Logistiksystems zeichnet sich dadurch aus, dass der Informationsspeicher fest mit dem zu befördernden Objekt verbunden ist.

Eine Weiterentwicklung des Verfahrens, der Vorrichtung, des Behälters und des Logistiksystems sieht vor, dass Informationen wenigstens einer Sendung erfasst werden, wobei die Informationen einer Sendung zugeordnet sind.

Eine Fortbildung des Verfahrens, der Vorrichtung, des Behälters und des Logistiksystems zeichnet sich dadurch aus, dass es sich bei den erfassten Informationen um einen oder mehrere Codes handelt, welche die Sendung oder die Sendungen identifizieren.

Hierdurch ist es möglich, Tracking und/oder Tracing der Sendungen auf eine einfache und zuverlässige Weise zu verbessern.

Durch die Erfindung werden logistische Funktionen verbessert. Ferner wird durch die Erfindung auf besonders einfache und zweckmäßige Weise ein Logistiksystem bereitgestellt, das Tracking und Tracing für eine Vielzahl von Sendungen ermöglicht.

Bevorzugte Ausführungsformen der Erfindung stellen die ersten Daten unmittelbar an dem Einlieferungsort bereit und beschleunigen so die Verarbeitung der als Sendung zu befördernden Objekte.

Der Zustellort wird vorzugsweise von dem Auftraggeber des Transports ausgewählt. Bei einer Rücksendung ist dies beispielsweise ein Lager eines Händlers oder Herstellers.

Eine Weiterentwicklung des Verfahrens, der Vorrichtung, des Behälters und des Logistiksystems sieht vor, dass ein Abholer der Sendungen den Einlieferungsvorgang beendet, indem er eine entsprechende Funktion an einem Eingabemittel auswählt.

Eine Fortbildung des Verfahrens, der Vorrichtung, des Behälters und des Logistiksystems zeichnet sich dadurch aus, dass das Eingabemittel ein mobiles Benutzerterminal ist.

Es ist vorteilhaft, die erfindungsgemäß erfassten Einlieferungsdaten - als Bestandteil der ersten Daten - für eine Steuerung von logistischen Vorgängen in dem Logistiksystem einzusetzen.

Eine Weiterentwicklung der Erfindung sieht vor, wenigstens einen Bearbeitungsvorgang in dem Logistiksystem in Abhängigkeit von den ersten Daten durchzuführen.

So ist es beispielsweise möglich, Kapazitäten in Bearbeitungszentren für die Sendungen - insbesondere Brief- oder Paketzentren - in Abhängigkeit von den ersten Daten zu steuern.

Bei den zu befördernden Objekten kann es sich beispielsweise um verschiedene Arten von Objekten handeln, die jeweils mit bestimmten Verfahrensschritten verbunden sind. In typischen Logistiksystemen, beispielsweise im postalischen Bereich, sind Paketen oder Päckchen Identifizierungsmittel wie Codes (Identcodes) zugeordnet, um den Weg einer betreffenden Sendung möglichst effektiv steuern und verfolgen zu können. Herkömmlicherweise muss ein derartiger Code von Erfassungsmitteln eines Behälters erfasst werden, wenn eine Sendung deponiert wird. Beispielsweise wird eine Postnummer in Form eines eingescannten Codes oder einer über eine Tastatur eingegebenen Zeichenfolge erfasst.

Während der Erfassung von die Sendungen identifizierenden Identifikationsnummern können auch Sendungen auftreten, welche zusätzlich mit einem speziellen Identcode versehen sind, der bei der Annahme ebenfalls eingescannt werden muss. Ferner kann es sich um Nachnahmesendungen mit einzugebenden Nachnahmebeträgen oder jegliche weitere Spezialsendungen mit zusätzlichen Schritten handeln.

Eine Weiterentwicklung des Verfahrens, des Logistiksystems, des Behälters und des Computerprogrammprodukts sieht vor, dass die Leseeinheit oder eine mit ihr verbundene Datenverarbeitungseinheit die ersten Daten auswertet.

Eine Fortbildung des Verfahrens, des Logistiksystems, des Behälters und des Computerprogrammprodukts zeichnet sich dadurch aus, dass die ersten Daten gespeichert werden.

Eine Weiterentwicklung des Verfahrens, des Logistiksystems, des Behälters und des Computerprogrammprodukts sieht vor, dass die ersten Daten in dem Speichermedium gespeichert werden.

Eine Fortbildung des Verfahrens, des Logistiksystems, des Behälters und des Computerprogrammprodukts zeichnet sich dadurch aus, dass die ersten Daten in der Leseeinheit und/oder der mit der Leseeinheit verbundenen Datenverarbeitungseinheit gespeichert werden.

Eine Weiterentwicklung der Erfindung sieht vor, dass die Datenverarbeitungseinheit eine Auswertung der ersten Daten vornimmt.

Eine Fortbildung des Verfahrens, des Logistiksystems, des Behälters, des Transportmittels und des Computerprogrammprodukts zeichnet sich dadurch aus, dass wenigstens ein Handhabungsvorgang des Behälters in Abhängigkeit von der Auswertung erfolgt.

Für einen erfindungsgemäßen Einsatz eignen sich vielfältige Arten von Informationsträgern, wie Sendungsaufkleber und Transponder.

Besonders bevorzugt ist ein Einsatz von Informationsträgern, die mit wenigstens einer Identifikationsangabe versehen sind. Transponder mit Identifikationsangabe werden nachfolgend auch als RFID-Tags bezeichnet.

Ein RFID-Tag besteht beispielsweise aus einem Mikrochip und einer Antenne. Auf dem Mikrochip ist ein Code gespeichert, der die ersten Daten und/oder andere verarbeitungsrelevante Informationen enthält. Insbesondere handelt es sich bei den Informationen um Identifikationsangaben.

Transponder sind so ausgestattet, dass sie auf ein auslösendes (Radio-) Signal eines Lesegerätes selbst Signale senden und/oder empfangen. Aktive Transponder enthalten eine Energieversorgung für ihren Betrieb. Passive Transponder erhalten hingegen Energie durch die von dem Lesegerät ausgesendeten Signale.

Die technische Realisierung der Erfindung beinhaltet vorzugsweise eine Datenbank, in der Informationen zu den zu transportierenden Sendungen enthalten sind.

Eine Weiterentwicklung der Erfindung zeichnet sich dadurch aus, dass durch ein Ortungsmittel in Verbindung mit dem Objekt (der Sendung) die Position des Objekts bestimmt wird und die Position des Objekts den erhaltenen ersten Daten zugeordnet wird. Dabei kann die Position des Objekts durch ein Ortungsmittel direkt an dem Objekt oder an einem Transportmittel bestimmt werden, mit welchem das Objekt transportiert wird. Befindet sich das Ortungsmittel an einem zugehörigen Transportmittel, steht es vorzugsweise in Verbindung mit der Datenverarbeitungseinheit des Objekts.

Die Position des Objekts kann beispielsweise durch ein Ortungsmittel in Form eines GSM-Moduls, eines GPS-Moduls und/oder eines Peilsenders bestimmt werden. Die verschiedenen Ortungsmittel können dabei in Abhängigkeit von einer geforderten Genauigkeit der Positionsbestimmung eingesetzt werden, wobei sie wahlweise senkrecht oder parallel eingesetzt werden können.

Als Erfassungsmittel für die Sendung kann eine Leseeinheit, beispielsweise ein Codeleser oder eine Antenne vorgesehen sein. Die Sendungen werden über das Auslesen von an den Sendungen befindlichen Informationsträgern registriert, wenn der mit der Sendung verbundene Informationsträger (Speichermedium) bei einem Einlieferungsvorgang der Sendung an der Leseeinheit vorbeibewegt wird.

Die Leseeinheit kann ferner mit einem Pulkerfassungsgerät versehen sein, welches die Sendungen erfasst, wenn alle Sendungen in einen Behälter eingebracht sind.

Bei der Sendungserfassung wird wenigstens die Anzahl der in den Behältern eingebrachten Sendungen in der Datenverarbeitungseinheit registriert. Dabei reduziert ein aus dem Behälter entnommenes Objekt die Anzahl der in der Datenverarbeitungseinheit erfassten Sendungen, wobei der Vorgang der Einlieferung einer Sendung aus dem Behälter dadurch registriert wird, dass die Anzahl der Vorgänge durch den zu dem Gegenstand gehörenden, eindeutig identifizierbaren RFID-Tag erfasst wird.

Durch die Verbindung mit einer zentralen Datenverarbeitungseinheit können ferner Informationen über die Objekte in der Datenbank aktualisiert und der Betrieb der Vorrichtung an sich verändernde Anforderungen angepasst werden.

Eine elektronische Weiterleitung der ersten Daten erfolgt vorzugsweise nach einem Empfang der weiteren Daten.

Die Speicherung und/oder die Übermittelung der weiteren Daten ist insbesondere vorteilhaft, um eine oder mehrere der nachfolgenden Wirkungen zu erzielen:
- Nachweis, dass die Sendungsannahme erfolgte;
- Übermittelung des Zeitpunkts der Einlieferung der Sendungen aus der Vorrichtung (für ein Tracking der eingelieferten Sendungen) und/oder eine Speicherung des Zeitpunkts der Einlieferung der Sendungen aus der Vorrichtung (für ein Tracing der eingebrachten Sendungen).

Derartige Informationen sind besonders bevorzugte Beispiele erfindungsgemäßer weiterer Daten.

Zusätzlich zur Information darüber, dass eine Einlieferung oder Sendungserfassung stattgefunden hat, können auch andere Informationen Bestandteil der weiteren Daten sein und als weitere Daten erfasst und gegebenenfalls übermittelt und/oder gespeichert werden.

Eine Fortbildung des Verfahrens, des Logistiksystems, des Behälters, des Transportmittels und des Computerprogrammprodukts zeichnet sich dadurch aus, dass eine Position der Sendung ermittelt wird.

Eine Weiterentwicklung des Verfahrens, des Logistiksystems, des Behälters und des Computerprogrammprodukts sieht vor, dass die Position der Sendung gespeichert wird.

Eine Fortbildung des Verfahrens, des Logistiksystems, des Behälters, des Transportmittels und des Computerprogrammprodukts zeichnet sich dadurch aus, dass die Position in einer Datenverarbeitungseinheit gespeichert wird.

Eine Weiterentwicklung des Verfahrens, des Logistiksystems, des Behälters und des Computerprogrammprodukts sieht vor, dass die Position der Sendung bestimmt und dass die Position der Sendung den erhaltenen ersten Daten und/oder den zweiten Daten zugeordnet wird.

Die folgenden drei Arten zur Erfassung der ersten Daten sind besonders bevorzugt:
Die erste Art betrifft die Erfassung im Bereich eines Benutzercomputers, die weitere Art die Erfassung im Bereich einer Einlieferungsstelle. Die dritte Art für die Erfassung der ersten Daten ist die Erfassung im Bereich einer Bearbeitungseinheit - beispielsweise in einem Versandzentrum.

Bei der Erfassung der ersten Daten, z. B. in einem Versandzentrum, kann es zu einer dezentralen Vorbereitung der Sendung in Bezug auf Verzollungsfähigkeit kommen, sofern dies nicht über die ersten beiden Erfassungsoptionen (Benutzercomputer, Einlieferstelle) möglich ist. Auf diese Weise muss die Erfassung der Daten nicht zentral in einer internationalen Frachtstation erfolgen, wo die Verzollung vorbereitet wird, sondern es wird sichergestellt, dass alle Sendungen, ganz gleich wo die ersten Daten erfasst worden sind, vorbereitet in der internationalen Frachtstation eingehen, so dass dort nur die zweiten Daten erfasst werden müssen und kein weiterer Bearbeitungsvorgang (Sonderprozess) erforderlich ist.

Die ersten Daten können also entweder vom Kunden eingegeben werden (Benutzercomputer oder Terminal in Einlieferstelle) oder von Mitarbeitern des Logistikdienstleisters (Postunternehmen) in einer oder mehreren zentralen Datenerfassungsstellen.

Diese Informationen können ggf. mit einer Information über die Sendung verknüpft werden.

Ein Beispiel für eine bevorzugte Information über die Sendung ist die Information, dass die Sendung erfasst wurde, Ort der Erfassung der Sendung oder Zeit der Erfassung der Sendung.

Die Erfindung beinhaltet verschiedene Formen des Erfassens der weiteren Daten der Sendung, beispielsweise bei der Einlieferungsstelle oder in einer Datenerfassungseinheit in einem Sendungsbearbeitungszentrum - beispielsweise in einem Briefzentrum, einem Paketzentrum oder einem Frachtzentrum.

In einer besonders bevorzugten Ausführungsform der Erfindung handelt es sich bei den weiteren Daten um Erfassungsdaten zu der Sendung. Die Erfassungsdaten werden bei einer Erfassung der Sendung angelegt. Sie beinhalten eine oder mehrere der nachfolgenden Angaben:
Bevorzugte Beispiele der Erfassungsdaten sind Zustandsinformationen zu der Sendung. Bei den Zustandsinformationen kann es sich beispielsweise um einen Hinweis handeln, dass eine Sendung an einer Erfassungsstelle vorhanden war. Die Erfassungsdaten können jedoch auch sehr viel weitergehende Informationen enthalten, beispielsweise zu einem Aufenthaltsort der Sendung, zu ihrer Beschaffenheit oder zu ihrem Zustand. Beispielsweise handelt es sich hier um Informationen, die es ermöglichen, den Status der Sendung zu bestimmen. Gegebenenfalls können zusätzlich zu diesen Informationen weitere Informationen in die Erfassungsdaten eingebracht werden, beispielsweise über eine Unversehrtheit der Sendung und/oder über eine Unbeschädigtheit des Inhalts.

Die Information über die Unversehrtheit der Sendung umfasst insbesondere eine Information, dass die Sendung nicht geöffnet oder verändert wurde.

Diese Information ist für eine Steuerung der Bearbeitung der Sendung sehr vorteilhaft. Beispielsweise ist es möglich, ein Verfahren zum Befördern und/oder Sortieren der Sendung so durchzuführen, dass eine Sendung, bei der eine Veränderung ihrer Beschaffenheit oder ihres Zustandes festgestellt wurde, aus einem Beförderungslauf der Sendungen ausgeschleust wird.

Hierdurch ist es beispielsweise möglich, Sendungen, bei denen eine Gefahr bestehen könnte, dass ihnen nach Ihrer Einlieferung unerlaubte Gegenstände hinzugefügt wurden, aus dem Beförderungslauf der Sendungen auszuschleusen.

Der Begriff "Erfassung" beinhaltet vielfältige Realisierungsmöglichkeiten, beispielsweise eine Identifikation Warensendung oder eines die Warensendung begleitenden Informationsträgers (beispielsweise eines Lieferscheins).

Dies ermöglicht eine Erhöhung der Bearbeitungsgeschwindigkeit der Sendung.

Bei einem Vorliegen der weiteren Daten und/oder bei einem Empfang der weiteren Daten erfolgt eine Übermittelung der ersten Daten, (gegebenenfalls mit einigen oder allen der weiteren Daten!

Es ist besonders vorteilhaft, einen Trigger, beispielsweise einen Datenbanktrigger, einzusetzen.

Ein Erhalt der weiteren Daten kann als ein Ereignis ausgewertet werden.

Ein Ereignis (engl. event) dient beispielsweise zur Steuerung eines Programmflusses. Vorgebbare Ereignisbehandlungsroutinen (engl. listener, observer, event handler) werden dann ausgeführt, wenn ein bestimmtes Ereignis auftritt, insbesondere wenn die weiteren Daten empfangen werden.

Dies geschieht beispielsweise durch eine fest verdrahtete Schaltung, eine speicherimplementierte Schaltung oder eine Datenverarbeitungseinheit. Die Datenverarbeitungseinheit kann mittels geeigneter Softwareroutinen programmiert werden. Beispielsweise lässt sich eine ereignisorientierte Programmierung gut mit den Konzepten der objektorientierten Programmierung kombinieren: Objekte definieren dann nicht mehr nur Eigenschaften und Methoden, sondern sind auch Ereignisquellen und bieten die Möglichkeit, die Ereignisbehandlung zu beeinflussen. Hierbei ist es möglich, die Ereignisbehandlungsroutinen (englisch: Eventhandler) als Objekte zu modellieren.

Bei bestimmter Art von Ereignissen, insbesondere Änderungen (z. B. INSERT, UPDATE, DELETE bei SQL) von Daten in einer Tabelle, wird ein gespeichertes Programm aufgerufen, das weitere Tätigkeiten vornimmt.

Trigger werden u. a. zur Wahrung der Datenkonsistenz (Integritätschecks) und zum Einfügen, Löschen oder Ändern von Referenzdaten eingesetzt. Der Trigger wird ausgeführt, wahlweise bevor die Änderung an der referenzierten Tabelle vorgenommen wird oder danach.

Da Trigger selber Datensätze einfügen, ändern und löschen können, kann ein Trigger durch seine Ausführung weitere Trigger auslösen. Dies ermöglicht eine weitere Automatisierung von Bearbeitungsvorgängen.

Bei derartigen Bearbeitungsvorgängen handelt es sich beispielsweise um eine Weiterleitung der ersten Daten und/oder der zweiten Daten an einen entsprechenden Empfänger, beispielsweise einen Bearbeitungscomputer einer Zolldienststelle.

Eine Weiterbildung des erfindungsgemäßen Versandsystems beinhaltet ein erstes Benutzerterminal zur Eingabe der ersten Daten.

Eine Weiterbildung des erfindungsgemäßen Versandsystems beinhaltet ein Bearbeitungszentrum mit einem weiteren Benutzerterminal zur Eingabe der weiteren Daten.

Eine Weiterbildung des erfindungsgemäßen Versandsystems beinhaltet einen Server, der die Daten für die Warensendung von dem ersten und dem weiteren Benutzerterminal wahlweise speichert, verwaltet, bearbeitet und/oder auswertet.

Eine Weiterbildung des erfindungsgemäßen Versandsystems beinhaltet eine Kommunikationseinrichtung, die mit dem ersten Benutzerterminal, gegebenenfalls dem weiteren Benutzerterminal und dem Server verbunden ist und eine Datenumwandlung jeweils so vornimmt, dass die Daten des ersten und gegebenenfalls des weiteren Benutzerterminals sowie des Servers miteinander kompatibel sind.

Eine Weiterbildung des erfindungsgemäßen Versandsystems beinhaltet eine Kommunikationseinrichtung, wobei die Kommunikationseinrichtung eine oder mehrere Schnittstellen zu mindestens einem weiteren Versandsystem und/oder einem weiteren Datenverarbeitungssystem umfasst.

Es ist zweckmäßig, dass nicht nur an einer Empfangsstation eingelesene Informationen zu einer Warensendung weitergeleitet werden, sondern auch zuvor gespeicherte Informationen zu der Warensendung. Durch ein Vorliegen der Informationen zu der Warensendung in zwei Bestandteilen, nämlich einem Bestandteil auf der Warensendung selbst und einem anderen Bestandteil in einer zentralen Datenbank, wird der Lese- und Bearbeitungsaufwand für eine Warensendung reduziert.

Das macht sich beispielsweise beim Ausdrucken eines Online-Labels für die Warensendung vorteilhaft bemerkbar. Das Ausdrucken des Online-Labels erfolgt direkt beim Kunden oder in einem Filialterminal. Die dabei erfassten Daten werden an eine zentrale Datenbank geschickt und können dort immer wieder mit Hilfe des Identcodes der Sendung ausgelesen werden. Dadurch entfällt später bei der Einlieferung und Sortierung in einem Postzentrum die erneute Erfassung der Daten.

Es ist zweckmäßig, die ersten Daten an einen vorgesehenen Datenempfänger weiterzuleiten. Bei den Daten handelt es sich um gespeicherte Informationen zu der Warensendung und/oder zu dem Warenabsender. Ein Beispiel für einen bevorzugten Empfänger ist ein Zentralrechner einer zuständigen Zollbehörde, an den diese Informationen übermittelt werden.

Es ist damit möglich, für die Verzollung einer Warensendung relevante Informationen zeitlich unabhängig vom eigentlichen Versand der Ware an einen Server zu übermitteln und dort bereitzustellen. Die Aufnahme von elektronischen Kundendaten beschleunigt darüber hinaus die Abfertigungsprozesse und gewährleistet eine Steigerung der Datenqualität bei der Zollabwicklung. So ist es mit Hilfe eines elektronischen Datenverarbeitungssystems möglich, die bereitgestellten Informationen auf Vollständigkeit zu überprüfen. Des Weiteren können in Abhängigkeit von den Informationen sichere Beförderungsmittel und/oder Container für die Warensendung bereitgestellt werden.

Das erfindungsgemäße Versandsystem ist in der Lage, verschiedene Nachrichtenformate zu senden und zu empfangen. Des Weiteren kann eine durch das Versandsystem bereitgestellte Plattform, beispielsweise für den Austausch von Zollinformationen, in Deutschland bereitgestellt durch ARGUS, beliebig erweitert werden. So lassen sich Kunden individuell oder über konsolidierende Vorsysteme anbinden, sowie verschiedene Dienstleister im Versandwesen und Behörden, zum Beispiel verschiedene nationale oder internationale Zollbehörden.

Mit dem erfindungsgemäßen Versandsystem lassen sich große Sendungsmengen abwickeln. So ist ein Potential für mehrere Millionen Sendungen pro Jahr denkbar.

Die Schnittstelle führt vorzugsweise zu Datenverarbeitungssystemen bei weiteren so genannten "zugelassenen Wirtschaftsbeteiligten" ("Authorized Economic Operator"). Für einen "zugelassenen Wirtschaftsbeteiligten" ist Voraussetzung, dass die Zollbestimmungen eingehalten werden, insbesondere elektronische Vorabanmeldungspflichten bei der Ein- und Ausfuhr unter Einhaltung bestimmter zeitlicher Vorgaben. Des Weiteren ist finanzielle Solvenz nachzuweisen, und eine ordnungsgemäße Buchführung ist zu gewährleisten, insbesondere durch Einsatz eines Systems zur Ablage von kommerziellen und Transport-Dokumenten. Darüber hinaus sind geeignete Sicherheitsmaßnahmen zu treffen, die das Risiko im grenzüberschreitenden Warenverkehr minimieren, insbesondere im Rahmen eines standardisierten, EU-einheitlichen Risikomanagements.

Auf diese Weise lässt sich ein sehr effektives Versandsystem mit den so genannten "zugelassenen Wirtschaftsbeteiligten", die die oben genannten Voraussetzungen erfüllen, installieren.

Ein besonderer Vorteil des Versandsystems besteht darin, dass die Abgabe einer Anmeldung bei der Zollbehörde, betreffend eine Warensendung, und die Abgabe der Warensendung an sich bei einem Paketdienstleister zeitlich und örtlich völlig unabhängig voneinander verlaufen können. Somit ist es sowohl bei der Einfuhr als auch bei der Ausfuhr einer Warensendung möglich, die verschiedenen Versandabfertigungsbausteine flexibel und unabhängig voneinander durchzuführen.

Für ein Einfuhrverfahren sind das beispielsweise die Bausteine "Abgabe einer summarischen Anmeldung bei einer Zollbehörde", "Abgabe einer Zollanmeldung bei einer Zollbehörde", "physische Ankunft im Zollgebiet der EU" und "Gestellung der Waren bei einer Zollbehörde".

Für ein Ausfuhrverfahren sind die Bausteine beispielsweise "Abgabe einer summarischen Anmeldung bei einer Ausfuhrzollstelle", "Abgabe einer Zollanmeldung bei einer zuständigen Ausfuhrzollstelle", "Transport einer Warensendung zur EU-Außengrenze", "Gestellung der Ware bei einer zuständigen Ausfuhrzollstelle" sowie "Überprüfung einer Warensendung bei einer zuständigen Ausfuhrzollstelle".

In einer bevorzugten Ausführungsform des Versandsystems ist vorgesehen, dass es sich bei dem weiteren Versandsystem und/oder dem weiteren Datenverarbeitungssystem um ein nationales oder internationales Zollabwicklungssystem handelt. Beispiel für ein nationales Zollabwicklungssystem ist ATLAS, das automatisierte Tarif- und lokale Zollabwicklungssystem in Deutschland. Beispiel für ein internationales Zollabwicklungssystem ist MEDICI, die Abkürzung für "Mails Electronic Data Interchange & Customs Integration".

Eine weitere bevorzugte Ausführungsform des Versandsystems sieht vor, dass es sich bei dem weiteren Versandsystem und/oder dem weiteren Datenverarbeitungssystem um ein nutzerangepasstes Zollabwicklungssystem handelt. Dies ist beispielsweise ein System wie CURARE, das für "Customs Reorganisation and Redesign" steht. Das System stellt die Wirtschaftlichkeit und Rechtskonformität des internationalen Geschäfts für ein Unternehmen bei der Zollabwicklung postalischer Sendungen sicher. Damit werden eine Identifizierung einer Warensendung, Risikominimierung, Gesetzeskonformität und Performance unter Einhaltung definierter Qualitätskriterien gesichert.

Durch die Anbindung des erfindungsgemäßen Versandsystems in der oben genannten Weise ist es möglich, die Einhaltung EU-einheitlicher Risikokriterien zu überwachen. Eine Risikobewertung für einen Versandabfertigungsprozess kann abhängig vom Einhaltungsgrad des jeweils vorgeschriebenen Zollrechts erfolgen, und ein Fehlverhalten eines Wirtschaftsbeteiligten in einem Land wirkt sich dann direkt auf die Zollabwicklung in einem anderen Land aus.

Für ein Unternehmen erweist es sich insbesondere als Vorteil, wenn eine elektronische Anmeldung für Warensendungen möglich ist. Für Briefe, Postkarten, Drucksachen, Blindenpost und dergleichen kann eine Anmeldung entfallen. Des Weiteren können vereinfachte elektronische Anmeldungen für abgabenfreie Warensendungen vorgesehen werden.

Ein weiterer Vorteil des erfindungsgemäßen Versandsystems besteht darin, dass bereits online oder an einem ersten Benutzerterminal eine rechtsverbindliche Vollmacht des Versenders für die Abfertigung einer Warensendung durch die betreffende Postorganisation erteilt werden kann.

An einem der Benutzerterminals kann darüber hinaus vorgesehen sein, dass eine solche Vollmacht oder eine bereits eingegebene Zollanmeldung für eine Warensendung wieder für ungültig erklärt werden kann.

Das erfindungsgemäße Versandsystem erlaubt darüber hinaus, dass online oder an den Benutzerterminals Eingangsprüfungen und Plausibilitätschecks stattfinden, beispielsweise in der Art, dass anhand einer Wertgrenze festgelegt wird, ob eine Anmeldung für eine Warensendung erforderlich ist. Die Festlegung der Wertgrenze kann beispielsweise davon abhängen, ob es sich um eine B2B-, C2B- oder C2C-Sendung handelt, was durch ein Nutzergruppenkonzept gesteuert werden kann.

Bei dem weiteren Datenverarbeitungssystem, an das das erfindungsgemäße Versandsystem angebunden werden kann, handelt es sich beispielsweise auch um stationäre Erfassungsterminals, Internetapplikationen zur Erstellung von Versandscheinen oder individuelle Systeme von Großkunden.

Eine weitere bevorzugte Ausführungsform des Versandsystems sieht vor, dass die Daten für die Warensendung Informationen zum Absender und zum Empfänger sowie zollrelevante Informationen umfassen.

Solche Informationen, die üblicherweise online oder an einem Benutzerterminal eingegeben werden, umfassen in der Regel den Wert einer Warensendung, das Herkunftsland, eine Beschreibung sowie eine Warentarifnummer.

In einer Zollinhaltserklärung sind insbesondere folgende Angaben enthalten:
- Name und Anschrift des Absenders und des Empfängers,
- genaue Bezeichnung des Inhalts und der Menge der Warensendung,
- das Nettogewicht der einzelnen Gegenstände sowie das Gesamtgewicht der Warensendung inkl. Verpackung,
- der Wert der einzelnen Gegenstände sowie der Gesamtwert der Warensendung,
- die Art der Warensendung und
- Datum und Unterschrift des Absenders.

Für Handelswaren sind weitergehende Angaben erforderlich, beispielsweise die Angabe einer Zolltarifnummer nach dem "Harmonisierten System der Bezeichnung und Codierung der Ware (HS)", das Ursprungsland der Ware, sowie eine Handelsrechnung oder ein vergleichbares Dokument, aus dem der Warenwert hervorgeht.

Eine besonders bevorzugte Ausführungsform des Versandsystems sieht vor, dass im Internet oder beim ersten Benutzerterminal ein elektronisches Formular zum Ausfüllen durch einen Nutzer bereitgestellt wird. Die dort erfassten Daten werden mithilfe spezifizierter Nachrichtenformate (z.B. ITMATT (Item Attributes Message) an Folgesysteme übertragen. ITMATT bildet dabei die Informationen der Formulare CN 22 und CN 23 so ab, dass ein Austausch zwischen verschiedenen Postgesellschaften ermöglicht wird.

In einer zusätzlichen vorteilhaften Ausführungsform des Versandsystems umfasst das weitere Benutzerterminal eine Einrichtung zum Scannen der Warensendung oder Teilen davon, insbesondere eines auf der Warensendung aufgebrachten Identcodes beziehungsweise auf oder in der Warensendung anderweitig aufgebrachter oder codierter Informationen, wobei die Speicherung der codierten Daten in Form von Barcodes, RFID Tags oder anderen analogen oder digitalen Datenträgern erfolgen kann. Damit ist es möglich, beispielsweise bei Einlieferung einer Warensendung als Postsendung, ein Scannen des Identcodes vorzunehmen und per Datenbankabfrage seinen Inhalt zu erkennen (dieser wurde ja bereits online bzw. am ersten Benutzerterminal erfasst). Insbesondere kann nun der vorhandene Sendungsdatensatz mit weiteren Daten verknüpft werden, bzw. einem neuen Versand-Datensatz hinzugefügt werden.

Der Server umfasst beispielsweise ein System wie ARGUS und stellt damit eine Plattform für den Austausch von Zollinformationen im Rahmen von MEDICI bereit.

Besonders bevorzugt ist es, wenn beim Scannen des Frachtbriefs weitere Daten am weiteren Benutzerterminal erfasst werden, beispielsweise ein Abholdatum für die Warensendung. Die Eingabe solcher Daten ist unabhängig davon, ob ein Scannen der Warensendung oder Teilen davon am weiteren Benutzerterminal stattfindet.

Die Aufgabe der Erfindung wird darüber hinaus durch ein Verfahren zur Bearbeitung von Daten gelöst, die in einem Versandsystem für mindestens eine Warensendung anfallen. Das erfindungsgemäße Verfahren ist durch die folgenden Schritte gekennzeichnet:
- Erfassen von Daten für die Warensendung an einem ersten Benutzerterminal,
- Erfassen von Daten für die Warensendung an einem weiteren Benutzerterminal,
- Weiterleitung der Daten vom ersten und vom weiteren Benutzerterminal an eine Kommunikationseinrichtung, die mit einem Server zur Bearbeitung der Daten verbunden ist,
- Bearbeitung der Daten vom ersten und vom weiteren Benutzerterminal durch den Server und gegebenenfalls Rücksendung der modifizierten oder unmodifizierten Daten.
- Versandbearbeitung der Warensendung in einer internationalen Auswechslungsstelle,

In einer bevorzugten Ausführungsform des Verfahrens ist vorgesehen, dass die durch den Server bearbeiteten Daten anschließend an die Kommunikationseinrichtung und von dort ggf. über eine Schnittstelle zu mindestens einem weiteren Versandsystem und/oder einem weiteren Datenverarbeitungssystem weitergeleitet werden.

Bei dem weiteren Datenverarbeitungssystem handelt es sich - wie bereits ausgeführt - beispielsweise um das nationale Zollabwicklungssystem ATLAS oder das internationale Zollabwicklungssystem MEDICI.

Ebenso ist es möglich, Daten von der Schnittstelle zu einem weiteren Datenverarbeitungssystem zu leiten, das eine an den Nutzer angepasste Zollabwicklung erlaubt, beispielsweise CURARE.

Die Erfindung wird im Folgenden beispielhaft anhand der beigefügten Zeichnungen erläutert, ohne dass hierdurch der allgemeine Erfindungsgedanke beschränkt wird.

Es zeigt
- Fig. 1: ein beispielhaftes Versandsystem für mindestens eine Warensendung,
- Fig. 2: eine Prinzipdarstellung eines erfindungsgemäßen Versandsystems mit unterschiedlichen Ausführungsformen und
- Fig. 3: eine schematische Darstellung zur Veranschaulichung der Erfindung.

An einem ersten Benutzerterminal (Term1) werden Daten zu einer Warensendung über ein Server-Account an eine Kommunikationseinrichtung (EDI-CC) geleitet.

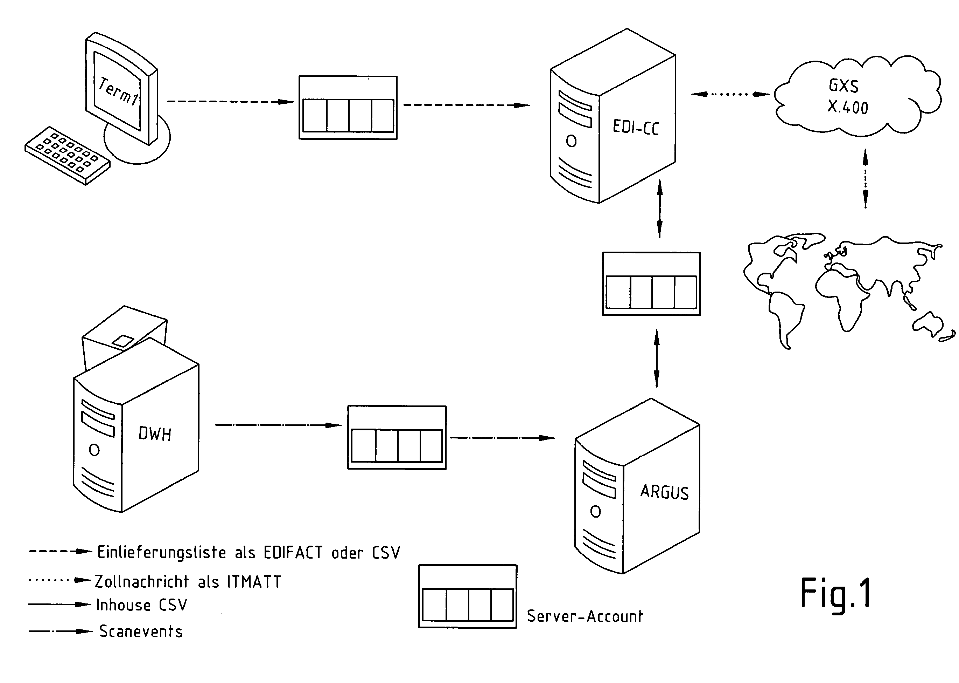

Zeitlich und örtlich unabhängig davon wird eine Warensendung, in der Figur 1 als Paket angedeutet, das teilweise von dem weiteren Nutzerterminal (TERM2) verdeckt wird, an eine Empfangsstation angeliefert. Die Empfangsstation kann beispielsweise die Filiale eines Paketdienstleisters sein oder ein nachgelagertes Paketzentrum, in dem Sendungen konsolidiert werden. Das weitere Benutzerterminal (TERM2) verfügt über eine Einrichtung zum Erfassen beziehungsweise Scannen des auf der Warensendung aufgebrachten Frachtbriefs bzw. der darauf oder an anderer Stelle aufgebrachten codierten Informationen. Des Weiteren wird am weiteren Benutzerterminal (TERM2) optional ein Abhol- und/oder Sendetermin für die Warensendung eingegeben. Außerdem können am weiteren Terminal grundsätzlich auch bestimmte Versanddaten erfasst werden.

Die am weiteren Benutzerterminal empfangenen weiteren Daten, das sind ggf. der Abhol- oder Sendetermin sowie das gescannte Bild beziehungsweise die erfassten codierten Informationen, werden über ein Server-Account an einen Server, umfassend eine Plattform für den Austausch von Zollinformationen (ARGUS), weitergegeben.

In dem in der Figur 1 dargestellten Beispiel erfolgt die Weiterleitung der Daten vom weiteren Benutzerterminal nicht über die Kommunikationseinrichtung (EDI-CC), sondern direkt an den Server (ARGUS). Diese Variante ist im Rahmen der Erfindung gleichfalls denkbar und möglich.

Die Daten am ersten Benutzerterminal werden in Form einer Einlieferungsliste im Format EDIFACT oder CSV weitergeleitet, wobei auch andere Datenformate vorstellbar sind. Die Kommunikation zwischen der Kommunikationseinrichtung (EDI-CC) und dem Server (ARGUS) erfolgt über ein intern verwendetes Datenformat (Inhouse CSV, wobei auch andere Datenformate vorstellbar sind). Die Kommunikationseinrichtung (EDI-CC) verfügt über eine Schnittstelle (GXS) zu mindestens einem weiteren Versandsystem und/oder einem weiteren Datenverarbeitungssystem, das in der Figur 1 als weltweit agierendes Postversandsystem dargestellt ist.

In der Figur 1 ist somit ein erweiterbares und flexibles System dargestellt, das im Einklang mit einer bereits bestehenden Infrastruktur für Nachrichtenkommunikation zwischen Versanddienstleistern und Zollbehörden eingerichtet und verändert werden kann, ohne dass ein Nutzer von diesen Eingriffen beeinträchtigt wird.

Erfolgt am ersten Benutzerterminal eine Erfassung von Daten über das Einfüllen eines CN 22- oder CN 23-Formulars, so findet anschließend eine automatische Übertragung der Informationen an die Kommunikationseinrichtung (EDI-CC) statt. Die Anbindung des ersten Benutzerterminals erfolgt beispielsweise über DFÜ oder andere Datentransferformate (z.B. GPRS, UMTS).

Der Server (ARGUS) umfasst beispielsweise Module, mit denen länderbezogene Sammelnachrichten sowie Standardauswertungen erstellt werden können.

Der Vorteil des erfindungsgemäßen Versandsystems besteht auch darin, dass die komplette Logik im Server (ARGUS) integriert ist, so dass Erweiterungen und Änderungen am System im Hinblick auf weitere Teilnehmer vorgenommen werden können, ohne dass aufwändig und kompliziert in die Logik des Systems eingegriffen werden muss.

Die Kommunikationseinrichtung (EDI-CC) ist im Zusammenhang mit dem erfindungsgemäßen Versandsystem von besonderer Bedeutung, da sie eine Verbindung zwischen den bereits im Server (ARGUS) vorliegenden Daten der Zollinhaltserklärungen, die am ersten Benutzerterminal zu einer Warensendung eingegeben worden sind, und den bei der physischen Einlieferung der Warensendung am weiteren Benutzerterminal empfangenen Daten herstellt, und somit nach Eingang von Informationen aus beiden Datenquellen durch die Weitergabe dieser Daten an einen Server (ARGUS) die Avisierung von zollrelevanten Wareninformationen an ein Zielsystem initiieren kann.

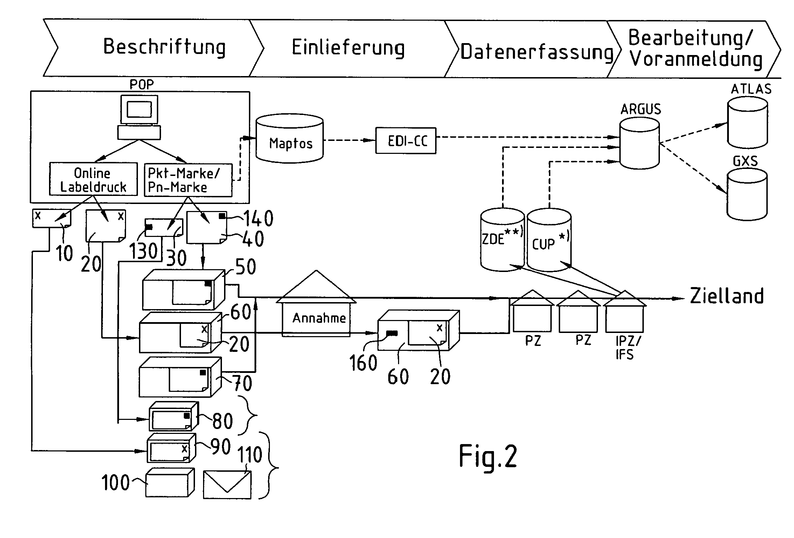

Fig. 2 zeigt eine Prinzipdarstellung der Erfindung. Hierbei sind verschiedene Arten der Erfassung der ersten Daten dargestellt. Beispielsweise können die ersten Daten im Bereich eines ersten Terminals - vorzugsweise eines Benutzerterminals POP erfasst werden. Bei den ersten Daten handelt es sich um die in dieser Anmeldung dargestellten Daten, insbesondere um Sendungsdaten, Kundendaten und Zolldaten.

Die ersten Daten werden von dem Benutzerterminal POP erfasst. Die Erfassung erfolgt beispielsweise unter Einsatz eines Programms, das eine Plausibilitäts- und Vollständigkeitsprüfung ermöglicht und so für eine Vollständigkeit und Datenintegrität der ersten Daten sorgt.

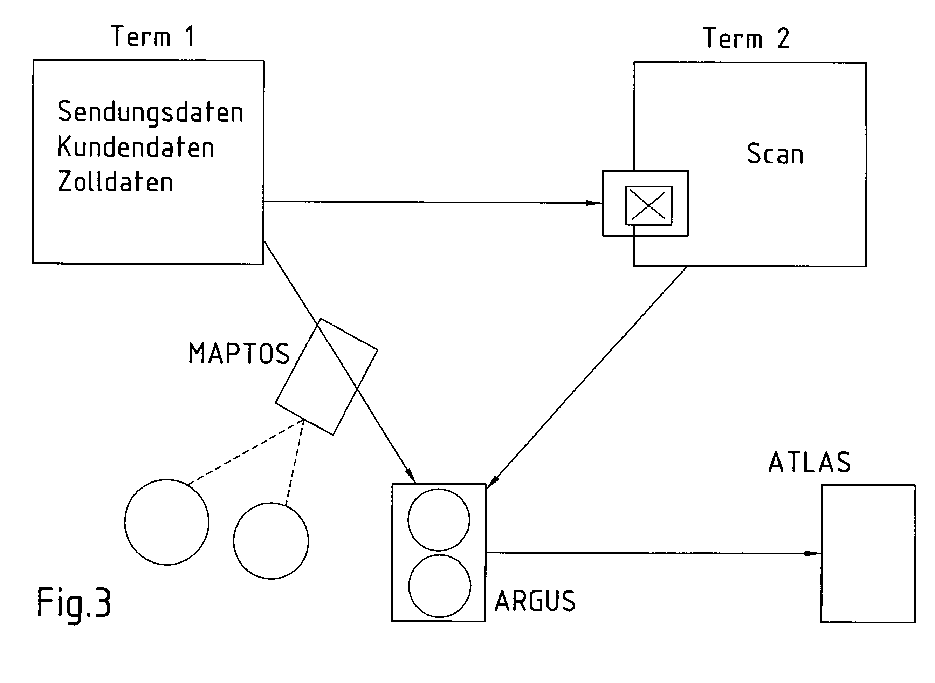

Das Terminal POP ist eine der bevorzugten Ausführungsformen des in Fig. 1 und Fig. 3 dargestellten ersten Terminals Term 1.

Das Benutzerterminal POP ermöglicht eine Erzeugung von Online-Labeln 10, 20 und Pkt-Marken beziehungsweise Pn-Marken 130 und 140.

Die Marken 130 und 140 werden auf die Sendungen aufgebracht - beispielsweise durch Kleben.

Päckchencodes (PN-Codes) dienen wie die Identcodes der Pakete als Identifizierer der Sendung und sind eindeutig. Der Unterschied zu den Paket-Identifizierern besteht darin, dass diese Daten nur intern verwendet werden können und nicht für den Kunden zu sonstigen Zwecken, beispielsweise zur Sendungsverfolgung nutzbar sind.

Im Bereich eines ersten Terminals Term1 werden erste Daten zu der Warensendung erfasst. Hierbei handelt es sich beispielsweise um Sendungsdaten, Kundendaten oder Zolldaten.

Unter Sendungsdaten versteht man alle Daten, die zur Beschreibung der Sendung relevant sind. Hierunter fallen: Absender- und Empfängerdaten, Produkt- und Servicekennzeichnung, Identifizierer und ggf. weitere codierte Informationen (z.B. Routingcode).

Unter Kundendaten sind alle Daten zusammengefasst, die den Kunden (Auftraggeber) der Sendung eindeutig identifizieren. Dies kann zum Beispiel in Form einer auf der Sendung aufgebrachten Kundennummer geschehen oder (bei Sendungen von Kunden ohne Kundennummer) durch die Absenderadresse repräsentiert werden.

Unter Zolldaten versteht man alle Daten, die zur zollrechtlichen Abwicklung erforderlich sind. Hierunter fallen Klassifikationen und Beschreibungen der Inhalte der Sendung sowie des Wertes.

Das Logistiksystem beinhaltet mindestens einen Netzwerkknoten. Ein bevorzugter Netzwerkknoten wird nachfolgend als Maptos bezeichnet.

Es ist jedoch nicht zwingend, dass das System mit einem Netzwerkknoten, wie durch Maptos beschrieben, operiert.
Es handelt sich hierbei vielmehr um eine vorteilhafte Ausführungsoption.

Maptos bezeichnet einen Netzwerkknoten, beziehungsweise Server, zum Bereitstellen wenigstens eines Dienstes, der ausgeführt wird.

Eine Weiterbildung des Netzwerkknotens Maptos umfasst wenigstens einen äußeren Konnektor zum Empfangen einer Dienstanforderung, deren Erzeugung in einem Nutzercomputer eines Internetmarktplatznutzers initiierbar ist, und zum Übermitteln eines in dem Anbieterserver ermittelten Bearbeitungsergebnisses an den Nutzercomputer, wobei der äußere Konnektor in der Lage ist, eine an den Internetmarktplatz angepasste Formatänderung der Dienstanforderung und des Bearbeitungsergebnisses vorzunehmen.

Ferner ist es zweckmäßig, den Netzwerknoten so auszubilden, dass er eine mit dem äußeren Konnektor verbundene Transformationseinheit zum Ermitteln wenigstens eines Servers zur Ausführung des Dienstes anhand von Angaben aufweist, die in der Dienstanforderung enthalten sind, und zum Adressieren der Dienstanforderung an den ermittelten Server.

Eine Weiterbildung des Netzwerkknotens umfasst wenigstens einen mit der Transformationseinheit verbundenen inneren Konnektor zum Übermitteln der Dienstanforderung an den Server und zum Empfangen des in dem Server ermittelten Bearbeitungsergebnisses von dem Server.
Eine Weiterbildung der Erfindung beinhaltet eine Weiterleitung der erfassten Daten.

Die Weiterleitung der erfassten Daten kann beispielsweise über einen Netzwerkknoten - insbesondere dem Netzwerkknoten Maptos - oder über eine direkte Schnittstelle erfolgen.

Ein Zeitpunkt für die Übermittelung wird jeweils entsprechend den Anforderungen gewählt. Beispielsweise kann eine Übermittelung der erfassten Daten bei einer Einlieferung der Postsendung erfolgen.

In einer bevorzugten Ausführungsform der Erfindung leitet der Netzwerkknoten Maptos die ersten Daten an den weiteren Server ARGUS weiter.

Falls eine Erfassung der Sendungen erfolgt, werden weitere Daten - insbesondere eine Information über die Erfassung der Sendung - an den Server ARGUS weitergeleitet.

Der Server ARGUS ist vorzugsweise als ein Konsolidierungsserver ausgebildet. Insbesondere ist er in einer bevorzugten Weiterbildung der Erfindung so ausgestattet, dass er ein Eintreffen der weiteren Daten als Ereignis erfassen und/oder auswerten kann und bei einem Eintreffen der weiteren Daten eine Weiterleitung der ersten Daten und/oder der weiteren Daten durchführt.

Fig. 3 zeigt einen Prinzipaufbau der Erfindung, bei dem dargestellt wird, dass im Bereich eines ersten Terminals Sendungsdaten, Kundendaten und Zolldaten als erste Daten erfasst werden.

Die ersten Daten werden sowohl physisch mit einer Sendung verbunden als auch elektronisch an eine Datenverarbeitungseinheit MAPTOS - beispielsweise einen Netzwerkknoten oder einen Server - übertragen. MAPTOS übernimmt eine Übertragung der Daten an eine weitere Datenverarbeitungseinheit ARGUS.

Bei einem physischen Erfassen der Sendung im Bereich eines zweiten Terminals TERM2, beispielsweise als ein Scan-Event der Sendung, werden das Erfassen der Sendung und ggf. weitere Informationen zu der Sendung als weitere Daten erhalten und an die Datenverarbeitungseinheit ARGUS übermittelt.

Bei einem Eintreffen der weiteren Daten in der Datenverarbeitungseinheit ARGUS werden die ersten Daten und ggf. auch die weiteren Daten zu der Sendung an eine weitere Datenverarbeitungseinheit ATLAS übermittelt.

Eine Weiterbildung der Erfindung beinhaltet eine weitere Datenverarbeitungseinheit.

GXS steht für Global Exchange System und ist ein weltweites Netzwerk zur Datenübertragung zwischen verschiedenen Teilnehmern.

Bei Sendungen, deren Sendungsdaten nicht bereits durch ein Terminal - beispielsweise eines der zuvor dargestellten Benutzerterminals POP oder ein Terminal im Bereich einer Filiale des Logistikunternehmens - oder an einer anderen Erfassungsstelle - beispielsweise bei einer elektronischen Paketfachanlage oder einer Drop-Box - erfasst wurden, erfolgt die Erfassung der Sendungsdaten in einem Bearbeitungszentrum für die Sendungen, etwa in einem Frachtzentrum FZ, einem Postzentrum PZ oder in einem internationalen Frachtzentrum IFZ (IFS) bzw. einem internationalen Postzentrum IPZ.

Hierbei erfolgt beispielsweise eine zentrale Datenerfassung ZDE. Diese kann beispielsweise an allen für eine Abwicklung internationaler Sendungen geeigneten Stellen erfolgen.

Die Erfassung der Sendungen durch die zentrale Datenerfassung ZDE ist beispielhaft dargestellt. Die weiteren Daten werden zweckmäßigerweise von einem weiteren Datenverarbeitungssystem CUP erfasst. Dieses CUP-System kann beispielsweise Sendungscodes, etwa Barcodes oder Data-Matrix-Codes, erfassen (insbesondere scannen) und für eine weitere Versandfertigung verwenden.

Es ist dabei sowohl möglich, auf ein bestehendes Erfassungssystem (Scan-System) als auch auf ein zusätzliches Scan-System zurückgreifen.

### Bezugszeichenliste:

- Term1: erstes Benutzerterminal (z.B. Internetseite, Filial-Terminal, Erfassungsterminal bei einer zentralen Datenerfassungsstelle.
- TERM2: weiteres Benutzerterminal (z.B. in einer Internationalen Auswechslungsstelle).
- ARGUS: Serverplattform für den Austausch von Zollinformationen
- EDI-CC: Kommunikationseinrichtung
- GXS: Schnittstelle zu mindestens einem weiteren Versandsystem und/oder einem weiteren Datenverarbeitungssystem
- ATLAS: Automatisiertes Tarif- und Zollabwicklungssystem (Deutschland)
- MEDICI: Mails Electronic Date Interchange & Customs Integration (international)
- CURARE: Customs Reorganisation and Redesign

## Patentansprüche

1. Versandsystem für mindestens eine Sendung mit folgenden Bestandteilen:
- ein erstes Terminal zur Eingabe von ersten Daten für die Sendung,
- ein Erfassungsmittel zum Erfassen von weiteren Daten für die Sendung,
- einen Konsolidierungsserver (z.B. ARGUS), der die ersten Daten wahlweise speichert, verwaltet, bearbeitet und/oder auswertet,
- ein Mittel zum Übertragen der ersten Daten an den Konsolidierungsserver,
- ein Mittel zum Übertragen der weiteren Daten an den Konsolidierungsserver,
- ein Mittel zur Überprüfung, ob die weiteren Daten für die Sendung empfangen wurden,
- ein Mittel zum Übertragen der ersten Daten an einen Datenempfänger, wobei das Mittel zum Übertragen der ersten Daten an den Datenempfänger so beschaffen ist, dass es feststellt, ob die weiteren Daten zu der Sendung empfangen wurden, und dass die Übertragung der ersten Daten erst dann erfolgt, wenn die weiteren Daten empfangen wurden.

2. Versandsystem nach Anspruch 1,
**dadurch gekennzeichnet,**
**dass** ein Feststellen, ob die weiteren Daten empfangen wurden, die Übermittelung der ersten Daten veranlasst.

3. Versandsystem nach Anspruch 1,
**dadurch gekennzeichnet,**
**dass** es eine Kommunikationseinrichtung (EDI-CC) zum Empfangen der ersten Daten enthält.

4. Versandsystem nach einem der vorangegangenen Ansprüche,
**dadurch gekennzeichnet,**
**dass** das erste Terminal ein Benutzerterminal ist.

5. Versandsystem nach einem der Ansprüche 1 bis 2
**dadurch gekennzeichnet,**
**dass** das erste Terminal ein automatisiertes Erfassungsterminal ist.

6. Versandsystem nach einem der vorangegangenen Ansprüche,
**dadurch gekennzeichnet,**
**dass** es ein Mittel zum Ausdrucken der ersten Daten beinhaltet.

7. Versandsystem nach Anspruch 6,
**dadurch gekennzeichnet,**
**dass** die ersten Daten in einem Speichermedium gespeichert werden, das mit der Sendung verbunden wird.

8. Versandsystem nach einem der vorangegangenen Ansprüche,
umfassend
- eine Ausgestaltung des Konsolidierungsservers (ARGUS), der auch die weiteren Daten wahlweise speichert, verwaltet, bearbeitet und/oder auswertet,
- eine Kommunikationseinrichtung (z. B. EDI-CC), die mit dem ersten Benutzerterminal (Term1), gegebenenfalls mit dem weiteren Benutzerterminal (TERM2) und dem Server (ARGUS) verbunden ist und eine Datenumwandlung jeweils so vornimmt, dass die Daten des ersten und gegebenenfalls des weiteren Benutzerterminals (Term1, TERM2) sowie des Servers (ARGUS) miteinander kompatibel sind, wobei die Kommunikationseinrichtung (EDI-CC) oder der Server (ARGUS) eine Schnittstelle zu mindestens einem weiteren Versandsystem, einem Netzwerk (z.B. GXS) und/oder einem weiteren Datenverarbeitungssystem umfasst.

9. Versandsystem nach Anspruch 8,
**dadurch gekennzeichnet,**
**dass** es sich bei dem weiteren Versandsystem und/oder dem weiteren Datenverarbeitungssystem um ein nationales oder internationales Zollabwicklungssystem (ATLAS, MEDICI) handelt.

10. Versandsystem nach Anspruch 8 oder 9,
**dadurch gekennzeichnet,**
**dass** es sich bei dem weiteren Versandsystem und/oder dem weiteren Datenverarbeitungssystem um ein nutzerangepasstes Zollabwicklungssystem (CURARE) handelt.

11. Versandsystem nach einem der vorhergehenden Ansprüche,
**dadurch gekennzeichnet,**
**dass** die Daten für die Sendung Informationen zum Absender und zum Empfänger sowie zollrelevante Informationen umfassen.

12. Versandsystem nach einem der vorhergehenden Ansprüche,
**dadurch gekennzeichnet,**
**dass** das erste Benutzerterminal (Term1) ein elektronisches Formular (CN 22, CN 23) zum Ausfüllen durch einen Nutzer bereitstellt.

13. Versandsystem nach einem der vorhergehenden Ansprüche,
**dadurch gekennzeichnet,**
**dass** das weitere Benutzerterminal zur Eingabe von Daten für die Warensendung eine Einrichtung zum Scannen beziehungsweise Erfassen der Warensendung oder Teilen davon umfasst, insbesondere eines auf der Warensendung aufgebrachten Frachtbriefs beziehungsweise an oder in der Warensendung aufgebrachten analogen oder digitalen Informationsträgern.

14. Verfahren zur Bearbeitung von Daten, die in einem Versandsystem für mindestens eine Warensendung anfallen,
**gekennzeichnet durch**
die folgenden Schritte:
- Erfassen von Daten für die Warensendung an einem ersten Benutzerterminal (Term1),
- Annahme der Warensendung an einer Empfangsstation,
- Erfassen von Daten für die Warensendung an einem weiteren Benutzerterminal (TERM2),
- Weiterleitung der Daten vom ersten und gegebenenfalls vom weiteren Benutzerterminal (Term1, TERM2) an eine Kommunikationseinrichtung (EDI-CC), die mit einem Server (ARGUS) zur Bearbeitung der Daten verbunden ist,
- Bearbeitung der Daten vom ersten und vom weiteren Benutzerterminal (Term1, TERM2) **durch** den Server (ARGUS).

15. Verfahren nach Anspruch 14,
**dadurch gekennzeichnet,**
**dass** die durch den Server bearbeiteten Daten anschließend direkt an die Kommunikationseinrichtung (EDI-CC) und/oder von dort gegebenenfalls über eine Schnittstelle und ein Datennetz (GXS) zu mindestens einem weiteren Versandsystem und/oder einem weiteren Datenverarbeitungssystem (ATLAS, MEDICI; CURARE) weitergeleitet werden.

16. Verfahren nach Anspruch 14
**dadurch gekennzeichnet,**
**dass** es sich bei dem weiteren Versandsystem und/oder dem weiteren Datenverarbeitungssystem um ein nationales oder internationales Zollabwicklungssystem (ATLAS, MEDICI) handelt.

17. Verfahren nach Anspruch 14 oder 15,
**dadurch gekennzeichnet,**
**dass** es sich bei dem weiteren Versandsystem und/oder dem weiteren Datenverarbeitungssystem um ein nutzerangepasstes Zollabwicklungssystem (CURARE) handelt.
